# EUROPÄISCHE PATENTSCHRIFT

(11) **EP 1 590 580 B1**
(45) Veröffentlichungstag und Bekanntmachung des Hinweises auf die Patenterteilung: **05.01.2011**
(21) Anmeldenummer: 04708330.8
(22) Anmeldetag: 05.02.2004
(51) Int. Cl.: F16H 1/00

(54) **SCHMIERVORRICHTUNG**
LUBRICATING DEVICE
DISPOSITIF DE LUBRIFICATION

(30) Priorität: 07.02.2003 DE 20301924 U
(43) Veröffentlichungstag der Anmeldung: 02.11.2005
(73) Patentinhaber: HYDAC FILTERTECHNIK GMBH, 66280 Sulzbach/Saar (DE)
(72) Erfinder: SMOLONG, Michael, 22037 Hamburg (DE); HERBER, Roland, 66132 Saarbrücken (DE); SCHMIDT, Armin, 66557 Illingen (DE)
(74) Vertreter: Bartels, Martin Erich Arthur
(86) Internationale Anmeldenummer: PCT/EP2004/001042
(87) Internationale Veröffentlichungsnummer: WO 2004/070231

(56) Entgegenhaltungen:
- EP-A- 0 024 697
- US-A- 1 554 081
- US-A- 4 658 665
- US-A- 5 809 845

## Beschreibung

Die Erfindung betrifft eine Schmiervorrichtung für Getriebe, insbesondere für Windenergieanlagen, mit mindestens zwei nebeneinander angeordneten und in Wirkverbindung miteinander stehenden Getriebestufen sowie einem Schmiermittelkreislauf, in den mindestens eine Filtereinheit geschaltet ist.

Es sind Schmiervorrichtungen für Getriebe bei Windenergieanlagen bekannt (z.B US 4658665) und auf dem Markt frei erhältlich, bei denen in der Art einer geschlossenen Umlaufschmierung Schmiermittel, insbesondere in Form von Schmieröl, mittels Getriebeölpumpen aus dem Getriebesumpf eines Getriebegehäuses mit den Getriebestufen entnommen, der Filterung mittels der Filtereinheit zugeführt und dann derart filtriert wieder an das Innere des Getriebegehäuses abgegeben wird, um dergestalt Verschmutzungen einschließlich in Form von Metallspänen aus dem Schmiermittel zu entfernen. Trotz dieser Maßnahmen kommt es in der Praxis zu frühzeitigen, häufig bereits nach sechs Monaten auftretenden Schäden an den Getrieben, und zwar sowohl innerhalb der Planetenstufe als auch an der Stirnradstufe, die regelmäßig die beiden Getriebestufen für den Rotor einer Windenergieanlage ausbilden. Insbesondere fällt die Planetenstufe aufgrund defekter Planetenlager häufig aus und auch die Getriebeölpumpen der Windenergieanlagen aufgrund verstärkt auftretender Metallspäne im Schmiermittelkreislauf, wobei der Grund darin liegt, dass innerhalb der Stirnradstufe aufgrund der Ausbildung großflächiger Ruhezonen für das Schmiermittel (Öl) die Möglichkeit geschaffen ist, dass sich dort schwere Metallpartikel absetzen können. Auch findet häufig der Schmiermittel- oder Ölaustausch nur im Bereich der Stirnradstufe statt, so dass nur bedingt ein Schmiermittelaustausch erfolgt und verunreinigtes oder verschmutztes Schmiermittel auf seiten der Planetenstufe verbleibt und dort die Schädigungen verursachen kann.

Ausgehend von diesem Stand der Technik liegt der Erfindung die Aufgabe zugrunde, die bekannten Schmiervorrichtungen unter Beibehalten ihrer Vorteile dahingehend weiter zu verbessern, dass sie funktionssicher und kostengünstig im Gebrauch sind und dass sie einen lang andauernden Getriebebetrieb gewährleisten, was hilft, die kostenintensiven Wartungsintervalle zu verlängern. Eine dahingehende Aufgabe löst eine Schmiervorrichtung mit den Merkmalen des Patentanspruches 1 in seiner Gesamtheit.

Dadurch, dass gemäß dem kennzeichnenden Teil des Patentanspruches 1 an der einen Getriebestufe das im Schmiermittelkreislauf umlaufende Schmiermittel abgeführt, durch die Filtereinheit abgereinigt und anschließend der jeweils anderen Getriebestufe zuführbar ist, sind stehende Ruhezonen für das Schmiermittel innerhalb des Getriebegehäuses mit den Getriebestufen vermieden und es ist sichergestellt, dass in vorgebbaren Zeiträumen das gesamte, in den Getriebestufen umlaufende Schmiermittel der Abreinigung und der Filtration durch die Filtereinheit dieser zugeführt wird. Es ist für einen Durchschnittsfachmann auf dem Gebiet der Schmiervorrichtungen, insbesondere im Bereich der Windenergieanlagen, überraschend, dass er mit der Maßnahme des permanenten Umlaufs unter Vermeidung von stehenden Ruhezonen im Schmiermittel- oder Getriebeölbad eine verbesserte Abreinigungsmöglichkeit des Schmiermittelstromes über die Filtereinheit erhält. Insbesondere die ansonsten sich absetzenden schweren Metallpartikel sind kontinuierlich dem Umlaufvorgang zuführbar, was zu einer Entlastung der Getriebeölpumpen führt und letztendlich auch der Getriebestufen, die insoweit von schwerwiegenden Verschmutzungen befreit, lang anhaltend ihrer Getriebefunktion nachkommen können, wozu auch die verbesserte Schmiermittel-einleitung an der jeweiligen Getriebestufe mit beiträgt.

Bei einer bevorzugten Ausführungsform der erfindungsgemäßen Schmiervorrichtung ist vorgesehen, dass zur Realisierung einer Tauchschmierung die Getriebestufen jeweils einzeln und zumindest teilweise eine Art Tauchbad mit Schmiermittelvorrat durchlaufen, das eine Unterteilung derart aufweist, dass jeder Getriebestufe ein eigener Badbereich zugeordnet ist. Vorzugsweise ist dabei derart die Unterteilung und die Schmiermittelmenge im Tauchbad gewählt, dass überströmendes Schmiermittel von der einen Getriebestufe mit der Schmiermittelzuführung zu dem Badbereich gelangt mit der nachfolgenden Getriebestufe und der Schmiermittelabführung. Die dahingehende Anordnung sorgt zum einen für eine optimale Schmierung der Getriebestufen innerhalb des Tauchbades an Schmiermittel und dennoch ist sichergestellt, dass innerhalb des Tauchbades eine Schmiermittelverschiebung und ein dahingehender fortlaufender Austrag stattfindet mit der Folge, dass kontinuierlich eine Abfuhr an Verschmutzungen aus dem Schmiermittel- oder Getriebeölbad erreicht ist.

Bei einer weiteren, besonders bevorzugten Ausführungsform der erfindungsgemäßen Schmiervorrichtung besteht die Schmiermittelabführung aus einer Absaugeinrichtung und die Schmiermittelzuführung aus einer Einspritzeinrichtung, wobei im Getriebegehäuse für die jeweilige Getriebestufe die genannten Einrichtungen diagonal einander gegenüberliegend angeordnet den oberen bzw. den unteren Bereich des Gehäuses durchgreifen. Aufgrund der dahingehenden Diagonalanordnung kommt es zu einer optimalen Schmiermittelverteilung innerhalb der Getriebestufen und die Durchlaufzeit für das Schmiermittel zwischen den Getriebestufen von der Einspritzseite zur Absaugseite ist gleichfalls optimiert.

Vorzugsweise umfaßt dabei die Getriebestufe ein Planetenradgetriebe sowie ein Stirnradgetriebe und mittels des Planetenradgetriebes ist es möglich, den Rotor der Windenergieanlage mit seiner niedrigen Umlaufdrehzahl auf höhere Drehzahlen zu bringen, wie man sie benötigt, um mittels des Stirnradgetriebes in sinnfälliger Weise einen Generator zur Stromerzeugung od. dgl. anzutreiben. Für einen lang andauernden und guten Schmiermittelbetrieb hat es sich dabei als günstig erwiesen, die Einspritzung eines abgereinigten Schmiermittels für das Planetenradgetriebe vorzusehen und die Absaugung für verunreinigtes Schmiermittel an der Stirnradgetriebestufe vorzunehmen.

Die bei der Schmiervorrichtung vorzugsweise zum Einsatz kommende Filtereinheit weist in Schmiermittelförderrichtung zunächst ein mit einem Bypass abgesichertes Feinfilter auf, dem nachgeschaltet in Reihe ein Grobfilter folgt. Besonders gute Abreinigungsergebnisse haben sich dabei ergeben, wenn die Filterfeinheit des Grobfilters etwa 5- bis 10-fach gröber gewählt ist als die Filterfeinheit des Feinfilters. Eine solche bevorzugt geeignete Filtereinheit ist in der DE 101 05 612 A1 der Anmelderin beschrieben.

Die erfindungsgemäße Schmiervorrichtung braucht nicht auf Getriebestufen bei Windenergieanlagen eingeschränkt zu sein, sondern kann vielmehr auch für andere Getriebestufen und Getriebeanordnungen mit und ohne Planetenradgetriebe Anwendung finden.

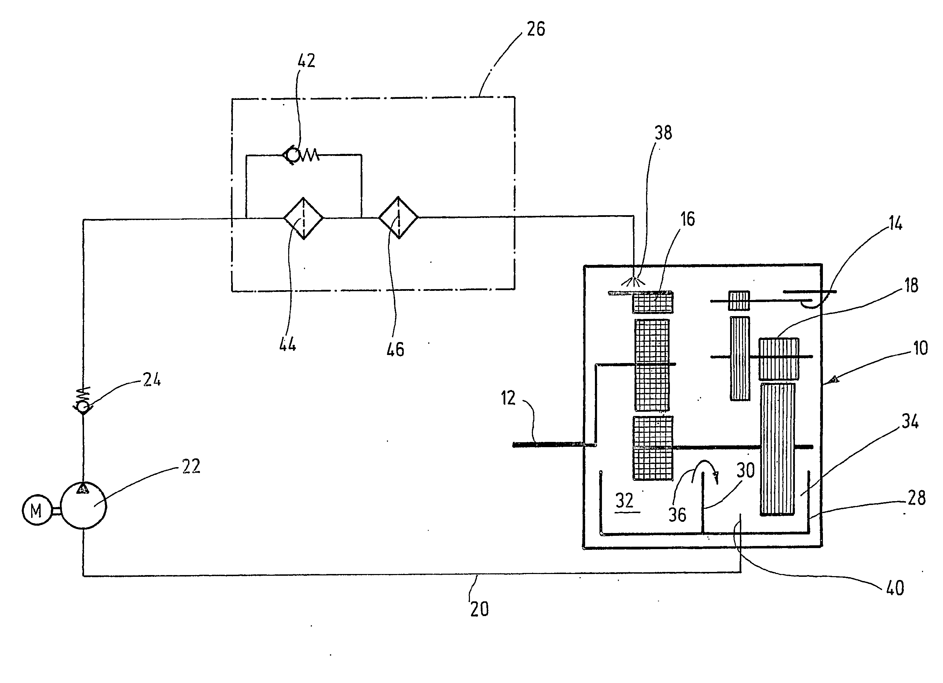

Im folgenden wird die erfindungsgemäße Schmiervorrichtung anhand eines Ausführungsbeispiels nach der Zeichnung näher erläutert. Dabei zeigt in prinzipieller und nicht maßstäblicher Darstellung die einzige Figur in der Art einer Schaltplanübersicht die erfindungsgemäße Schmiervorrichtung.

Die Schmiervorrichtung dient für ein als Ganzes mit 10 bezeichnetes Getriebe. Dahingehende, in der Figur gezeigte Getriebe 10 finden Verwendung bei sog. Windenergieanlagen, bei denen ein von Windkraft antreibbarer Rotor (nicht dargestellt) seine Abtriebsleistung an eine Eingangswelle 12 abgibt und nach Durchlaufen des Getriebes 10 wird die dahingehende Abtriebsleistung an eine Ausgangswelle 14 abgegeben, an die man beispielsweise einen Generator (nicht dargestellt) anschließen kann zur Erzeugung von elektrischem Strom. Da der Rotor meistens sehr niedrige Drehzahlen aufweist und der Generator für seinen Betrieb entsprechend höhere Eingangsdrehzahlen benötigt, sieht das Getriebe eine Übersetzung von niedrigen zu hohen Drehzahlen um den Faktor i von beispielsweise 1 : 80 vor. Dahingehende Getriebeaufbauten für Windenergieanlagen sind üblich, so dass an dieser Stelle hierauf nicht mehr näher eingegangen wird.

Des weiteren weisen dahingehende Getriebe regelmäßig zwei Getriebestufen 16,18 auf, wobei die jeweilige Getriebestufe wiederum aus mehreren Stufenteilen bestehen kann. Insbesondere wird für die erste Getriebestufe 16 ein sog. Planetenradgetriebe eingesetzt und für die zweite Getriebestufe 18 ein Stirnradgetriebe, wobei man die dahingehenden Stufen auch mit Planetenstufe bzw. Stirnradstufe bezeichnet. Des weiteren weist die erfindungsgemäße Schmiervorrichtung in der Art eines geschlossenen Kreises einen Schmiermittelkreislauf 20 auf. Für den Schmiermittelvortrieb dient eine übliche Motorpumpeneinheit 22, die in Schmiermittelförderrichtung nachfolgend über ein Rückschlagventil 24 üblicher Bauart abgesichert ist.

Nachfolgend ist zwischen Motorpumpeneinheit 22 und den beiden Getriebestufen 16,18 eine Filtereinheit 26 geschaltet.

Wie sich des weiteren aus der Schaltplanübersicht ergibt, wird an der einen zweiten Getriebestufe 18 das im Schmiermittelkreislauf 20 umlaufende Schmiermittel abgeführt und dann über die Motorpumpeneinheit 22 der Filtereinheit 26 zugeführt, bevor das derart abgereinigte Schmiermittel anschließend der jeweils anderen ersten Getriebestufe 16 zugeführt wird. Der dahingehende Schmiermittelumlauf kann durchgeführt werden unabhängig davon, ob der Rotor und mithin das Getriebe 10 in Betrieb ist oder nicht. Derart ließe sich über eine nicht näher dargestellte Steuerung eine Abreinigung des Schmiermittels erreichen, auch wenn die Anlage selbst stillgesetzt ist, beispielsweise weil im Hinblick auf den anstehenden Wind der Betrieb der Anlage nicht wirtschaftlich wäre.

Zur Realisierung einer Tauchschmierung für die Getriebestufen 16,18 ist eine Art Tauchbad 28 vorgesehen, das einen vorgebbaren Schmiermittelvorrat aufweist und in das die Getriebestufen 16,18 mit ihren Getrieberädern zumindest partiell eintauchen. In das Tauchbad 28 ist eine Unterteilung 30 eingebracht, wobei dann dergestalt jeder Getriebestufe 16,18 ein eigener Badbereich 32,34 zugeordnet ist. Insbesondere ist die genannte Unterteilung und die Schmiermittelmenge im Tauchbad 28 derart gewählt, dass überströmendes Schmiermittel 36 (siehe Pfeildarstellung) von der einen Getriebestufe 16 mit der Schmiermittelzuführung 38 zu dem zweiten Badbereich 34 gelangt mit der nachfolgenden Getriebestufe 18 mit der Schmiermittelabführung 40.

Bei der gewählten Ausführungsform ist die Schmiermittelabführung 40 aus einer Absaugeinrichtung gebildet und die Schmiermittelzuführung 38 aus einer Einspritzeinrichtung, wobei die dahingehende Absaug- und Einspritzwirkung über das Arbeitsvermögen der Motorpumpeneinheit 22 einstellbar ist. Insbesondere ist die genannte Einspritzeinrichtung derart ausgebildet, dass im Sinne eines Aufsprühvorganges großflächig Teile der ersten Getriebestufe 16 mit dem Schmiermittel bedeckt oder eingenebelt werden.

Wie sich des weiteren aus der Figur ergibt, sind im Getriebegehäuse 10 für die jeweilige Getriebestufe 16,18 die genannten Einrichtungen 38,40 diagonal einander gegenüberliegend angeordnet, wobei die Schmiermittelzuführung 38 den oberen Gehäuseteil des Gehäuses 10 durchgreift und die Schmiermittelabführung 40 in Form der Absaugeinrichtung den unteren Gehäusebereich, gebildet aus dem Gehäuseboden. Was die diagonale Anordnung anbelangt, besteht dem Grunde nach auch die Möglichkeit, bei einer nicht näher dargestellten Ausführungsform die Einspritzmenge der Oberseite der Stirnradstufe zuzuführen und die Absaugung auf der Unterseite der Planetenstufe vorzunehmen. Da aber gerade die Planetenstufe von ihrer Lagerung her gegen Verschmutzungen sehr empfindlich ist, hat es sich als günstig erwiesen, die vorangegangene Diagonalführung zu verwirklichen. Wie bereits dargelegt, wird die diagonale Fluidführung noch dadurch begünstigt und verbessert, dass überströmendes Schmiermittel 36 aus dem einen Badbereich 32 in den anderen Badbereich 34 weitergeleitet wird und dann einem Filtrationsvorgang über die Filtereinheit 26 zur Verfügung steht. Einem Sedimentieren oder Absetzen, insbesondere von schweren Verschmutzungsteilen, wie Metallspänen od. dgl., im Badbereich 32 ist derart wirksam begegnet.

Die Filtereinheit 26 kann ein Filterelement aufweisen; es hat sich jedoch als vorteilhaft erwiesen, in Schmiermittelförderrichtung zunächst ein mit einem Bypass 42 (federbelastetes Rückschlagventil) abgesichertes Feinfilter 44 vorzusehen, dem nachgeschaltet in Reihe ein Grobfilter 46 folgt. Im normalen Betrieb ist also vorgesehen, dass das Feinfilter 44 die Abreinigung an Verschmutzungen im Schmiermittelkreislauf 20 vornimmt und sollte das dahingehende Feinfilter 44 versagen, insbesondere von Verschmutzungen zugesetzt sein, bestünde die Möglichkeit, dass das Bypassventil 42 öffnet und den Fluidstrom dann dem Grobfilter 46 zuführt, wobei gröbere Verschmutzungen dann über das Grobfilter 46 zurückgehalten sind und keinesfalls in das Getriebe 10 mit seinen Getriebestufen 16,18 schädigend eindringen kann. Als besonders günstig für den vorliegenden Anwendungsbereich hat es sich ergeben, wenn der Grobfilter um den Faktor 10 gröber ausgelegt ist als die Filterstufe des Feinfilters 44. So kann der Feinfilter 44 eine Filterfeinheit von 5 µm aufweisen und der gröbere Schutzfilter eine Filterfeinheit von 50 µm Partikelgröße. Dahingehende, in Reihe geschaltete Filterstufen sind Stand der Technik und als besonders vorteilhaft hat es sich erwiesen, Filtereinheiten 26 nach der Lehre der DE 101 05 612 A1 der Anmelderin für das vorliegende Anwendungsgebiet zu verwenden.

Durch die Kombination von Absaugen aus dem Ölsumpf am Stirnradbereich und dem Einspritzen von Schmiermittel in die Planetenstufe nach Abreinigen über die Filtereinheit 26, ist eine Schmierversorgung für Getriebeteile von Windenergieanlagen erreicht, die einen sicher und lang andauernden störungsfreien Betrieb auch bei hartem Einsatz und Umgebungsbedingungen gewährleistet.

Die erfindungsgemäße Schmiervorrichtung kann für sich als Baueinheit eingesetzt werden; sie kann aber auch als zusätzliches System zu einer Standard-Umlaufschmierung oder zu einer Tauchbad-Schmierung installiert werden. Des weiteren besteht die Möglichkeit, in der Saugleitung zu der Motorpumpeneinheit 22 einen zusätzlichen Saugfilter oder ein Saugsieb (nicht dargestellt) zu integrieren, um dergestalt die Hydropumpe vor verschmutzungsbedingten Schäden zu schützen. Des weiteren ergibt die Analyse des Inhalts eines Saugsiebs Rückschlüsse auf die Verschleißvorgänge im Getriebe. Die Unterteilung der Badbereiche innerhalb des Getriebegehäuses kann auch durch Verippungen oder Versteifungen des Getriebegehäuses gebildet sein. Die in der Figur gezeigte Planetenstufe 16 weist sog. Planetenräder auf, die um das in der Figur zuunterst dargestellte Sonnenrad umlaufen und in Blickrichtung auf die Figur gesehen ist zuoberst das Hohlrad wiedergegeben; der dahingehende Aufbau von Planetenradgetrieben ist üblich, so dass an dieser Stelle hierauf nicht mehr näher eingegangen wird.

Gemäß der Darstellung nach der Figur bildet eine Getriebe- oder Planetenstufe 16 das Planetenradgetriebe oder den sog. Planetenteil des Getriebes, wohingegen zwei Getriebe- oder Stirnradstufen 18 das eigentliche Stirnradgetriebe bilden, das man auch mit Stirnradteil des Getriebes bezeichnet. Das erfindungsgemäße diagonale Schmierkonzept für die Schmiervorrichtung kann auch für Getriebe eingesetzt sein mit einer anderen Anzahl an Getriebestufen. Das stromabwärts vor der Pumpe 22 eingesetzte Rückschlagventil 24 ist optional und nicht zwingend notwendig. Insbesondere geeignet wäre ein dahingehendes Rückschlagventil 24 für eine Druckbegrenzung, wobei der Ölstrom aus dem Rückschlagventil dann auf die Saugseite der Pumpe zu leiten wäre (nicht dargestellt).

## Patentansprüche

1. Schmiervorrichtung für Getriebe (10), insbesondere für Windenergieanlagen, mit mindestens zwei nebeneinander angeordneten und in Wirkverbindung miteinander stehenden Getriebestufen (16,18) sowie einem Schmiermittelkreislauf (20), in den mindestens eine Filtereinheit (26) geschaltet ist, **dadurch gekennzeichnet, dass** an der einen Getriebestufe (18) das im Schmiermittelkreislauf (20) umlaufende Schmiermittel abgeführt, durch die Filtereinheit (26) abgereinigt und anschließend der jeweils anderen Getriebestufe (16) zuführbar ist.

2. Schmiervorrichtung nach Anspruch 1, **dadurch gekennzeichnet, dass** zur Realisierung einer Tauchschmierung die Getriebestufen (16,18) jeweils einzeln und zumindest teilweise eine Art Tauchbad (28) mit Schmiermittelvorrat durchlaufen, das eine Unterteilung (30) derart aufweist, dass jeder Getriebestufe (16,18) ein eigener Badbereich (32,34) zugeordnet ist.

3. Schmiervorrichtung nach Anspruch 2, **dadurch gekennzeichnet, dass** die Unterteilung und die Schmiermittelmenge im Tauchbad (28) derart gewählt ist, dass überströmendes Schmiermittel (36) von der einen Getriebestufe (16) mit der Schmiermittelzuführung (38) zu dem Badbereich (34) gelangt mit der nachfolgenden Getriebestufe (18) und mit der Schmiermittelabführung (40).

4. Schmiervorrichtung nach einem der Ansprüche 1 bis 3, **dadurch gekennzeichnet, dass** mindestens die eine Getriebestufe (16) mit der Schmiermittelzuführung (38) ein Planetenradgetriebe ist und mindestens die andere Stufe (18) mit der Schmiermittelabführung (40) ein Stirnradgetriebe.

5. Schmiervorrichtung nach einem der Ansprüche 1 bis 4, **dadurch gekennzeichnet, dass** die Schmiermittelabführung (40) aus einer Absaugeinrichtung besteht und die Schmiermittelzuführung (38) aus einer Einspritzeinrichtung und dass im Getriebegehäuse (10) für die jeweilige Getriebestufe (16,18) die genannten Einrichtungen (38,40) diagonal einander gegenüberliegend angeordnet den oberen bzw. den unteren Bereich des Gehäuses (10) durchgreifen.

6. Schmiervorrichtung nach Anspruch 5, **dadurch gekennzeichnet, dass** das Absaugen und Einspritzen des Schmiermittels sowie sein Umlauf im Schmiermittelkreislauf (20) durch eine Motorpumpeneinheit (22) veranlaßt ist.

7. Schmiervorrichtung nach Anspruch 6, **dadurch gekennzeichnet, dass** die Filtereinheit (26) zwischen Motorpumpeneinheit (22) und Getriebegehäuse (10) im Schmiermittelkreislauf (20) angeordnet ist.

8. Schmiervorrichtung nach einem der Ansprüche 1 bis 7, **dadurch gekennzeichnet, dass** die Filtereinheit (26) in Schmiermittelförderrichtung zunächst ein mit einem Bypass (42) abgesichertes Feinfilter (44) aufweist, dem nachgeschaltet in Reihe ein Grobfilter (46) folgt.

9. Schmiervorrichtung nach Anspruch 8, **dadurch gekennzeichnet, dass** die Filterfeinheit des Grobfilters (46) etwa 5- bis 10-fach größer gewählt ist als die Filterfeinheit des Feinfilters (44).

## Claims

1. A lubricating device for gear trains (10), especially for wind power stations, comprising at least two gear stages (16, 18) that are disposed next to each other and are effectively interconnected, and a lubricant circuit (20) into which at least one filter unit (26) is mounted, **characterised in that** at the one gear stage (18) the lubricant circulating inside the lubricant circuit (20) is discharged, drawn off by means of the filter unit (26), and then can be fed to the respective other gear stage (16).

2. The lubricating device according to Claim 1, **characterised in that** in order to implement splash lubrication the gear stages (16, 18) each pass individually, and at least partially, through a type of immersion bath (28) with a stock of lubricant which has a subdivision (30) such that a distinct bath region (32, 24) is assigned to each gear stage (16, 18).

3. The lubricating device according to Claim 2, **characterised in that** the subdivision and the quantity of lubricant in the immersion bath (28) is chosen such that any lubricant (36) overflowing from the one gear stage (16) with the lubricant feed (38) passes to the bath region (34) with the subsequent gear stage (18) and with the lubricant discharge (40).

4. The lubricating device according to any of Claims 1 to 3, **characterised in that** at least the one gear stage (16) with the lubricant feed (38) is a planetary gear train, and at least the other stage (18) with the lubricant discharge (40) is a spur gear.

5. The lubricating device according to any of Claims 1 to 4, **characterised in that** the lubricant discharge (40) consists of a suction device and the lubricant feed (38) of an injection device, and that within the gear train housing (10) for the respective gear stage (16, 18) the aforementioned devices (38, 40), positioned diagonally opposite one another, pass through the upper and the lower region of the housing (10).

6. The lubricating device according to Claim 5, **characterised in that** the suction and injection of the lubricant and its circulation within the lubricant circuit (20) is brought about by a motor pump unit (22).

7. The lubricating device according to Claim 6, **characterised in that** the filter unit (26) is disposed between the motor pump unit (22) and the gear train housing (10) in the lubricant circuit (20).

8. The lubricating device according to any of Claims 1 to 7, **characterised in that** the filter unit (26) has first of all in the direction of conveyance of the lubricant a fine filter (44) secured to a bypass (42) which is followed downstream in succession by a coarse filter (46).

9. The lubricating device according to Claim 8, **characterised in that** the filter fineness of the coarse filter (46) is chosen to be 5 to 10 times greater than the filter fineness of the fine filter (44).

## Revendications

1. Dispositif de lubrification d'engrenages (10), notamment pour des éoliennes, comprenant au moins deux étages (16, 18) d'engrenage disposés côte à côte et interagissant entre eux, ainsi qu'un circuit (20) d'agent lubrifiant, dans lequel est monté au moins un groupe (26) de filtration, **caractérisé en ce que** l'agent lubrifiant circulant dans le circuit (20) pour l'agent lubrifiant est évacué sur l'un des étages (18) d'engrenage, est épuré dans le groupe (26) de filtration et peut être envoyé ensuite respectivement à l'autre étage (16) d'engrenage.

2. Dispositif de lubrification suivant la revendication 1, **caractérisé en ce que**, pour la réalisation d'une lubrification par immersion, les étages (16, 18) d'engrenage passent respectivement individuellement au moins en partie dans une sorte de bain (28) d'immersion ayant une réserve d'agent lubrifiant, qui a une subdivision (30) de manière à ce qu'une partie (32 34) propre du bain soit associé à chaque étage (16, 18) d'engrenage.

3. Dispositif de lubrification suivant la revendication 2, **caractérisé en ce que** la subdivision et la quantité d'agent lubrifiant dans le bain (28) d'immersion sont choisis de manière à ce que de l'agent (36) lubrifiant débordant de l'un des étages (16) d'engrenage, ayant l'arrivée (38) d'agent lubrifiant, arrive à la partie (34) du bain ayant l'étage (18) d'engrenage suivant et ayant l'évacuation (40) de l'agent lubrifiant.

4. Dispositif de lubrification suivant l'une des revendications 1 à 3, **caractérisé en ce qu'**au moins l'un des étages (16) d'engrenage ayant l'arrivée (38) d'agent lubrifiant est un engrenage planétaire et l'autre étage (18) ayant l'évacuation (40) de l'agent lubrifiant est un engrenage droit.

5. Dispositif de lubrification suivant l'une des revendications 1 à 4, **caractérisé en ce que** l'évacuation (40) de l'agent lubrifiant est constituée d'un dispositif d'aspiration et l'arrivée (38) de l'agent lubrifiant est constitué d'un dispositif de projection et **en ce que**, dans le carter (10) de l'engrenage pour les étages (16, 18) respectifs de l'engrenage, lesdits dispositifs (38, 40) traversent la partie supérieure ou la partie inférieure du carter (10) en étant disposés de manière opposée l'un à l'autre en diagonal.

6. Dispositif de lubrification suivant la revendication 5, **caractérisé en ce que** l'aspiration et la projection de l'agent lubrifiant ainsi que sa circulation dans le circuit (20) pour l'agent lubrifiant sont provoqués par un groupe (22) motopompe.

7. Dispositif de lubrification suivant la revendication 6, **caractérisé en ce que** le groupe (26) de filtration est disposé entre le groupe (22) motopompe et le carter (10) d'engrenage dans le circuit (20) pour l'agent lubrifiant.

8. Dispositif de lubrification suivant l'une des revendications 1 à 7, **caractérisé en ce que** le groupe (26) de filtration a, dans la direction de transport de l'agent lubrifiant, d'abord un filtre (44) fin sécurisé par une dérivation (42) auquel fait suite en aval en série un filtre (46) grossier.

9. Dispositif de lubrification suivant la revendication 8, **caractérisé en ce que** le groupe de filtration du filtre (46) grossier est choisi à peu près 5 à 10 fois plus grand que le groupe de filtration du filtre (44) fin.
